# EUROPEAN PATENT APPLICATION

(11) **EP 0 905 007 A1**
(43) Date of publication of application: **31.03.1999**
(21) Application number: 98911221.4
(22) Date of filing: 07.04.1998
(51) Int. Cl.: B62D 7/14

(54) **FRONT AND REAR WHEEL STEERING SYSTEM FOR AUTOMOBILES**

(30) Priority: 08.04.1997 JP 105307/97
(71) Applicant: HINO JIDOSHA KOGYO KABUSHIKI KAISHA, Hino-shi Tokyo 191 (JP)
(72) Inventor: MOMIYAMA, Fujio-Hino Kojo of Hino Jidosha K. K. K., Hino-shi, Tokyo191-0003 oo (JP)
(74) Representative: Hasenrader, Hubert
(86) International application number: JP9801584
(87) International publication number: WO9845156

(57) **Abstract**

A front and rear wheel steering system used for an automobile, wherein a front power steering arrangement (not shown) steers front wheels (not shown) by an output generated in a front booster (not shown), and a horizontally laid rear booster (15) generates an output in accordance with the operation of the front power steering arrangement. When the rear booster (15) is turned, a rear rigid axle suspension (45) is anti-rollingoperated by the generated output, and simultaneously a rear rigid axle (42) is steered in the same phase as the front wheels at a minute steering angle with respect thereto.

## Description

### Technical Field

This invention relates to a front and rear wheel steering system for use in motor vehicles, and more particularly to a front and rear wheel steering system for use in motor vehicles in which a rigid axle is used.

### Background Art

Motor vehicles are generally low in limit of turning because they tend to roll outwardly when turning. Moreover, in motor vehicles having a rigid axle, steering stability is not at a high level due to delay of transmission of steering energy during the process of transmission of such steering energy from the front wheels to the rear axle caused by torsion of the frame, or the like, because no steering mechanism is provided on the rear axle.

It is, therefore, a problem of the present invention to provide a front and rear wheel steering system for use in motor vehicles in which turning stability is remarkably enhanced and an easy steering operation can be enjoyed.

### Disclosure of Invention

In this invention, a front power steering unit is caused to steer front wheels by an output power generated at a front booster, and a horizontal rear booster is operatively connected to the front power steering unit to generate an output power and causes, when turning, a rear rigid axle suspension to make an anti-roll by such generated output power and also causes, at the same time, a rear rigid axle to steer at a small steering angle in the same phase as the front wheels.

Also, in this invention, a front power steering unit is caused to steer front wheels by an output power generated at a front booster, and left and right vertical rear boosters are operatively connected to the front power steering unit to generate an output power and causes, when turning, a rear rigid axle suspension to make an anti-roll by such generated output power and also causes, at the same time, a rear rigid axle to steer at a small steering angle in the same phase as the front wheels.

### Brief Description of Drawing

Fig. 1 is a schematic view, partly omitted, of an embodiment of a front and rear wheel steering system for use in motor vehicles according to the present invention which is applied to a medium-sized truck;
Fig. 2 is a schematic plan view of the front and rear wheel steering system of Fig. 1 when viewed from the top;
Fig. 3 is a schematic side view of the front and rear wheel steering system of Fig. 1 when viewed from the side;
Fig. 4 is a schematic view, partly omitted, of an embodiment of a front and rear wheel steering system for use in motor vehicles according to the present invention which is applied to a medium-sized truck;
Fig. 5 is a schematic plan view of the front and rear wheel steering system of Fig. 4 when viewed from the top;
Fig. 6 is a schematic side view of the front and rear wheel steering system of Fig. 4 when viewed from the side;
Fig. 7 is a schematic view, partly omitted, of an embodiment of a front and rear wheel steering system for use in motor vehicles according to the present invention which is applied to a medium-sized truck;
Fig. 8 is a schematic plan view of the front and rear wheel steering system of Fig. 7 when viewed from the top; and
Fig. 9 is a schematic side view of the front and rear wheel steering system of Fig. 7 when viewed from the side.

### Best Mode for Carrying Out the Invention

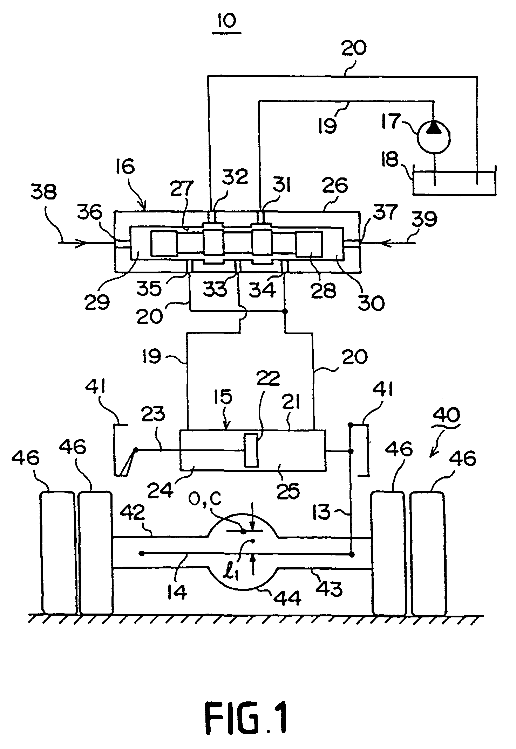

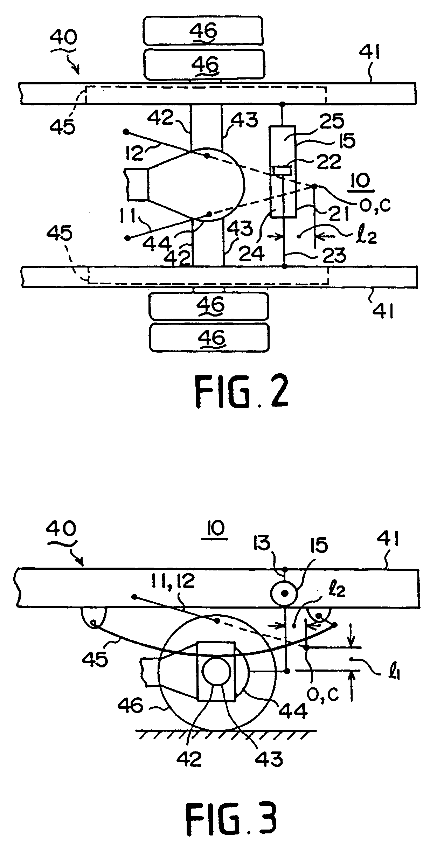

A specific embodiment of a front and rear wheel steering system for use in motor vehicles according to the present invention will be described hereinafter with reference to the drawings. Figs. 1 to 3 show an embodiment 10 of a front and rear wheel steering system for use in motor vehicles according to the present invention. In this front and rear wheel steering system 10, a front power steering unit (not shown) is caused to steer front wheels (not shown) by an output power generated at a front booster (not shown) and a horizontal rear booster 15 is operatively connected to the front power steering unit to generate an output power and causes, when turning, a rear rigid axle suspension 45 to make an anti-roll by such generated output power and also causes, at the same time, a rear rigid axle 42 to steer at a small steering angle in the same phase as the front wheels.

Particularly, in order to enhance a smooth anti-roll of the rear rigid axle suspension 45 and a smooth steering of the rear rigid axle 42, in the front and rear wheel steering system 10, the front power steering unit is caused to steer front wheels by an output power generated at the front booster, left and right rear links 11, 12 are arranged narrower backwardly at an appropriate space laterally of a frame 41, offset vertically forwardly of the frame 41, and connected to between the frame 41 and the rear rigid axle 42 to set a roll center O and an instantaneous center C of the rear rigid axle suspension 45 at a location behind of and above a center AO of the rear rigid axle 42, a horizontal rear booster 15 is operatively connected to the front power steering unit to generate an output power and causes, when turning, such generated output power to act on the rear rigid axle 42 with an acting position of such generated output power properly offset either leftwardly or rightwardly from the roller center O and the instantaneous center C at a location below and ahead of the centers O, C, so that the rear rigid axle suspension 45 makes an anti-roll and, at the same time, the rear rigid axle 42 steers at a small steering angle in the same phase as the front wheels. Of course, this rear rigid axle 42 normally fixedly supports rear wheels 46, 46 and 46, 46 on its left and right ends.

More specifically, the front and rear wheel steering system 10 comprises the front power steering unit caused to steer front wheels by an output power generated at the front booster, left and right rear links 11, 12 arranged narrower backwardly at an appropriate space laterally of a frame 41, raised vertically forwardly of the frame 41, and connected to between the frame 41 and the rear rigid axle 42 to set a roll center O and an instantaneous center C of the rear rigid axle suspension 45 at a location behind of and above a center AO of the rear rigid axle 42, a vertical turnable lever 13 located ahead of the roll center O and the instantaneous center C of the rear rigid axle suspension 45 with an upper end thereof leftwardly and rightwardly turnably supported on one side of the frame 41 and with a lower end thereof extending downwardly exceeding the roll center O and the instantaneous center C, a horizontal push pull rod 14 located ahead of and below the roll center O and the instantaneous center C and extending sidewardly of the roll center O and the instantaneous center C with one end thereof rotatably connected to a lower end of the turnable lever 13 and with the other end thereof rotatably connected to a rear axle housing 43 of the rear rigid axle 42, a horizontal rear booster 15 located above the push pull rod 14 with one end thereof rotatably connected to the turnable lever 13 and with the other end thereof rotatably connected to the other side of the frame 41, and a rear control valve 16 located at intermediate part of hydraulic pipings 19, 20 for connecting the horizontal rear booster 15 to a hydraulic pump 17 and an oil reservoir 18, operatively connected to the front power steering unit to supply and discharge a pressurized fluid to and from the horizontal rear booster 15, and to generate an output power at the horizontal rear booster 15.

The front power steering unit used herein is a normal integral type power steering unit comprising a front booster, and a front control valve (not shown) operated by the front booster and a steering wheel (not shown) to selectively supply a pressurized fluid from a hydraulic pump (not shown) to one pair of cylinder chambers of the front booster and at the same time, to selectively return a pressurized fluid from the one pair of cylinder chambers of the front booster to an oil reservoir (not shown).

The left and right steering links 11, 12 are connected to the frame 41 and a differential carrier 44 through a torque rod with use of a pin and a rubber bush in an ordinary manner.

The vertical turnable lever 13 and the horizontal push pull rod 14 are utilized at such area where an output power generated at the horizontal rear booster 15 is transmitted to the rear rigid axle 42, and in this case, they are assembled and set such that the anti-roll moment arm 11 is taken below the roll center O and the compliance steer moment arm 12 is taken ahead of the instantaneous center C.

The horizontal rear booster 15 is designed to generate an output power so that the rear rigid axle suspension 45 is made antiroll by a double-acting piston type reciprocal cylinder and at the same time, the rear rigid axle 42 is compliance steered. A head cover of a cylinder housing 21 is pivotally connected to the turnable lever 13 and a distal end (leading end) of a piston rod 23 is pivotally connected to the left of a frame 41. This horizontal rear booster 15 is constituted as a hydraulic circuit in which cylinder chambers 24, 25 are defined by a piston 22 within the cylinder housing 21, connected to the hydraulic pump 17 and the oil reservoir 18 through hydraulic pipings 19, 20 and selectively connected to the hydraulic pump 17 and the oil reservoir 18 by the rear control valve 16 which is located on intermediate parts of the hydraulic pipings 19, 20.

The rear control valve 16 is switched by a pressurized fluid produced in a spool valve and introduced from the front booster to opposite ends of the spool, caused to selectively supply the pressurized fluid from the hydraulic pump 17 to the cylinder chambers 24, 25 of the horizontal rear booster 15, and at the same time, caused to selectively return the pressurized fluid from the cylinder chambers 24, 25 of the horizontal rear booster 15 to the oil reservoir 18 to generate an output power at the horizontal rear booster 15.

Specifically, the rear control valve 16 includes a valve body 26, and a spool 28 reciprocally movably fitted into a spool bore 27 of the valve body 26 and for mutually dividedly defining at opposite end portions of the spool bore 27 control pressure chambers 29, 30 by opposite ends thereof. And in the rear control valve 16, the spool 28 is slid into the spool bore 27 to make a switching operation by a front left turn pressurized fluid and a front right turn pressurized fluid which are introduced into the control pressure chambers 29, 30 from the front power steering unit, so that the direction of the flow of the pressurized fluid supplied from the hydraulic pump 17 into the cylinder chambers 24, 25 of the horizontal rear booster 15 and at the same time, the direction of the flow of the pressurized fluid returned from the cylinder chambers 24, 25 of the rear booster 15 into the oil reservoir 18 is controlled.

The valve body 26 is formed on one side thereof with a pump port 31 and a tank port 32 at a predetermined space and on the other side thereof with three pressure ports 33, 34, 35 likewise at predetermined spaces. The valve body 26 is connected to intermediate parts of the hydraulic pipings 19, 20 through the pump port 31, the tank port 32, and the pressure ports 33, 34, 35. Furthermore, the valve body 26 is formed on opposite ends thereof with control pressure ports 36, 37 and connected at the control pressure ports 36, 37 to the corresponding left turn cylinder chamber and the right turn cylinder chamber of the front booster through the control pressure pipings 38, 39.

In this way, the rear control valve 16 is connected at the control pressure chambers 29, 30 to the left turn and right turn cylinder chambers of the front booster through the control pressure pipings 38, 39, and switched by the front left turn pressurized fluid and the front right turn pressurized fluid which are introduced from the left turn and right turn cylinder chambers into the control pressure chambers 29, 30. Of course, the switching operation of the rear control valve 16 is operatively connected to the front power steering unit.

Specifically, the switching operation of the rear control valve 16 is made such that the front left turn pressurized fluid is introduced from the left turn cylinder chamber of the front booster into the control pressure chamber 29 through the control hydraulic pipings 38 and the front right turn pressurized fluid is introduced from the right turn cylinder chamber of the front booster into the control pressure chamber 30 through the control hydraulic pipings 39, and the spool 28 is slid into the spool bore 27 by the front left turn pressurized fluid and the front right turn pressurized fluid. Also, the rear control valve 16 makes a switching operation in operative connection to the front power steering unit by the front left turn pressurized fluid and the front right turn pressurized fluid introduced from the front control valve of the front power steering unit.

Operation of the front and rear wheel steering system 10 will be described next. When the steering wheel is turned left during the travelling operation of the middle-sized truck 40, the front control valve supplies pressurized fluid from the hydraulic pump into the left turn cylinder chamber of the front booster and at the same time, the pressurized fluid is returned from the right turn cylinder chamber of the front booster into the oil reservoir and therefore, the front power steering unit steers the front wheels leftwardly by the output power generated at the front booster. On the other hand, the rear control valve 16 supplies the pressurized fluid from the hydraulic pump 17 into the cylinder chamber 24 of the horizontal rear booster 15 and at the same time, returns the pressurized fluid from the cylinder chamber 25 of the horizontal rear booster 15 into the oil reservoir 18 because the spool 28 is slid within the spool bore 27 by the front left turn pressurized fluid introduced from the left turn cylinder chamber of the front booster into the control pressure chamber 29 through the control pressure piping 38.

Since the direction of the flow of the pressurized fluid is controlled towards the horizontal rear booster 15 by the rear control valve 16 as mentioned above, the horizontal rear booster 15 generates an output power in the contracting direction and the output power thus generated causes the turnable lever 13 to turn leftwardly to push the horizontal push pull rod 14 leftwardly, thereby being transmitted to the rear axle housing 43. Along therewith, the output power causes the rear rigid axle suspension 45 to make an anti-rolling operation about the roll center O which also serves as the instantaneous center C through the anti roll moment arm 11 and at the same time, the output power causes the rear rigid axle 42 to turn about the roll center O and the instantaneous center C at a small steering angle in the same phase as the front wheels through the compliance steer moment arm 12. As a result, the middle-sized truck 40 is remarkably increased in turning stability and enhanced in easy steering. When the steering wheel is turned rightwardly, the front and rear wheel steering system is operated in the reverse way with respect to the above-mentioned motion.

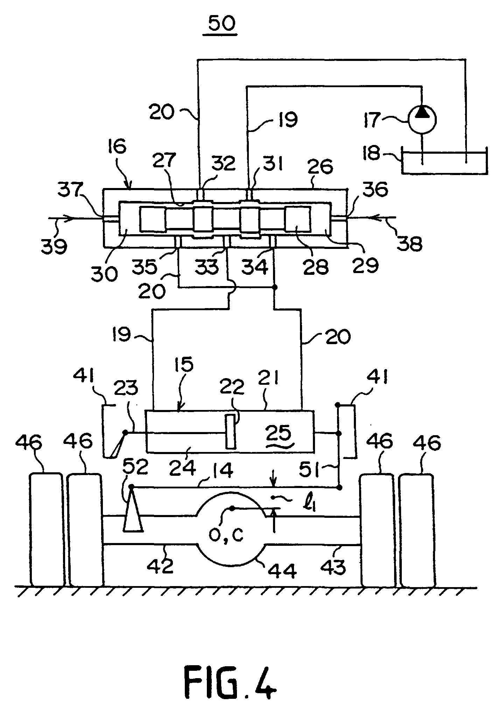

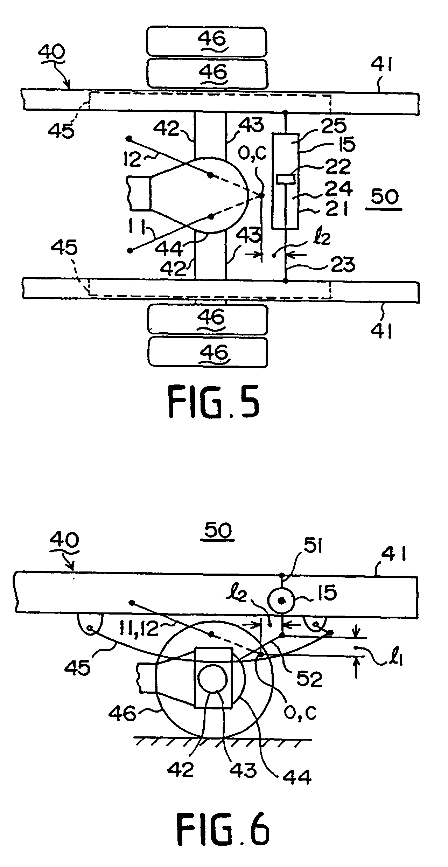

Figs. 4 to 6 show another embodiment 50 of a front and rear wheel steering system for use in motor vehicles according to the present invention which is applied to the middle-sized truck 40. This front and rear wheel steering system 50 comprises a front power steering unit (not shown) caused to steer front wheels by an output power generated at a front booster, left and right rear links 11, 12 arranged narrower backwardly at an appropriate space laterally of the frame 41, raised vertically forwardly of the frame 41, and connected to between the frame 41 and the rear rigid axle 42 to set a roll center O and an instantaneous center C of the rear rigid axle suspension 45 at a location behind of and above a center AO of the rear rigid axle 42, a vertical turnable lever 51 located behind of the roll center O and the instantaneous center C of the rear rigid axle suspension 45 with an upper end thereof leftwardly and rightwardly turnably supported on one side of the frame 41 and with a lower end thereof extended downwardly to a location above the roll center O and the instantaneous center C, a horizontal push pull rod 14 located behind of and above the roll center O and the instantaneous center C and extending sidewardly of the roll center O and the instantaneous center C with one end thereof rotatably connected to a lower end of the turnable lever 51 and with the other end thereof rotatably connected to the rear axle 42 side, and a horizontal rear booster 15 located above the push pull rod 14 with one end thereof rotatably connected to the turnable lever 51 and with the other end thereof rotatably connected to the other side of the frame 41, operatively connected to the front power steering unit to generate an output power and to cause, when turning, such generated output power to act on the rear rigid axle 42 through the turnable lever 51 and the push pull rod 14 so that the rear rigid axle suspension 45 makes an anti-roll and, at the same time, the rear rigid axle 42 steers at a small steering angle in the same phase as the front wheels.

More specifically, the front and rear wheel steering system 50 comprises a front power steering unit caused to steer front wheels by an output power generated at a front booster, left and right rear links arranged narrower backwardly at an appropriate space laterally of a frame 41, raised vertically forwardly of the frame 41, and connected to between the frame 41 and a rear rigid axle 42 to set a roll center O and an instantaneous center C of a rear rigid axle suspension 45 at a location behind of and above a center AO of the rear rigid axle 42, a vertical turnable lever 51 located behind of the roll center O and the instantaneous center C of the rear rigid axle suspension 45 with an upper end thereof leftwardly and rightwardly turnably supported on one side of the frame 41 and with a lower end thereof extended downwardly to a location above the roll center O and the instantaneous center C, a horizontal push pull rod 14 located behind of and above the roll center O and the instantaneous center C and extending sidewardly of the roll center O and the instantaneous center C with one end thereof rotatably connected to a lower end of the turnable lever 51 and with the other end thereof rotatably connected to the rear axle 42 side, a horizontal rear booster 15 located above the push pull rod 14 with one end thereof rotatably connected to the turnable lever 51 and with the other end thereof rotatably connected to the other side of the frame 41, and a rear control valve 16 located at intermediate parts of hydraulic pipings 19, 20 for connecting the horizontal rear booster 15 to a hydraulic pump 17 and an oil reservoir 18, operatively connected to the front power steering unit to supply and discharge a pressurized fluid to and from the horizontal rear booster 15, and to generate an output power at the horizontal rear booster 15.

The front power steering unit, the left and right rear links 11, 12 and the horizontal push pull rod 14 are those of the previously described front and rear wheel steering system 10. However, in this front and rear wheel steering system 50, since the anti-roll moment arm 11 is set above the roll center O common with the instantaneous center C and the compliance steer moment arm 12 is set behind the roll center O common with the instantaneous center C, the vertical turnable lever 51 is shorter than that of the previously described front and rear wheel steering system 10. Accordingly, the other end of the horizontal push pull rod 14 is pined to a bracket 52 of the rear axle housing 43.

Although the rear control valve 16 is the same in construction as that of the previously described front and rear wheel steering system 10, the anti-roll moment arm 11 of this front and rear wheel steering system 50 is set above the roll center O common with the instantaneous center C and the compliance steer moment arm 12 is set behind the roll center O common with the instantaneous center C. Accordingly, the left and right turn control pressure chambers 29, 30 are arranged in a reverse way, so that a front turn pressurized fluid is introduced from the left turn cylinder chamber of the front booster into the left turn control pressure chamber 29 through the control pressure piping 38 and a front right turn pressurized fluid is introduced from the right turn cylinder chamber of the front booster into the right turn control pressure chamber 30 through the control pressure piping 39.

Since the front and rear wheel steering system 50 is operated in the same manner as the previously described front and rear wheel steering system 10, description of the operation thereof is omitted.

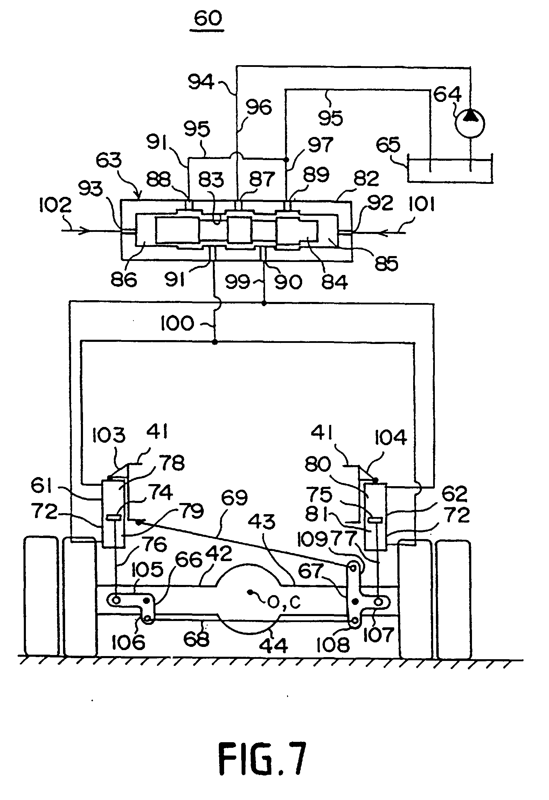

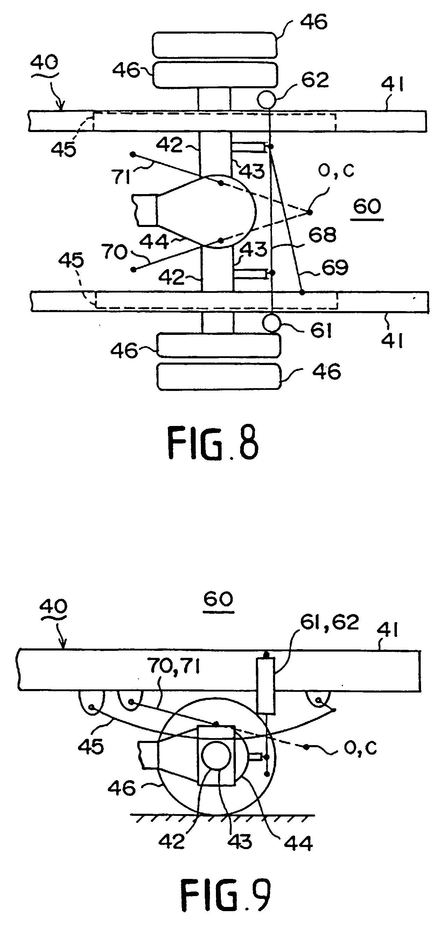

Figs. 7 to 9 show still another embodiment 60 of a front and rear wheel steering system for use in motor vehicles according to the present invention which is applied to the middle-sized truck 40. This front and rear wheel steering system 60 comprises a front power steering unit (not shown) caused to steer front wheels by an output power generated at a front booster (not shown), and left and right vertical rear boosters 61, 62 operatively connected to the front power steering unit to generate an output power and cause, when turning, the rear rigid axle suspension 45 to make an anti-roll by such generated output power and also cause, at the same time, the rear rigid axle 42 to steer at a small steering angle in the same phase as the front wheels.

More specifically, the front and rear wheel steering system 60 comprises a front power steering unit caused to steer front wheels by an output power generated at a front booster, and left and right vertical rear boosters 61, 62 rotatably supported on left and right of the frame 41 in a corresponding manner, a rear control valve 63 located at intermediate parts of hydraulic pipings for connecting the left and right vertical rear boosters 61, 62 to a hydraulic pump 64 and an oil reservoir 65, operatively connected to said front power steering unit to supply and discharge a pressurized fluid to and from said left and right vertical rear boosters 61, 62, and to generate an output power at the left and right vertical rear boosters 61, 62, an L-shaped rear rigid axle steer lever 66 turnably supported on the rear rigid axle housing 43 in such a manner as to correspond to the left vertical rear booster 61 and rotatably connecting a driving arm 105 to the left vertical rear booster 61, a T-shaped rear rigid axle steer lever 67 turnably supported on the rear rigid axle housing 43 in such a manner as to correspond to the right vertical rear booster 62 and rotatably connecting the driving arm 107 to the right vertical rear booster 62, a link rod 68 rotatably connected to between a driven arm 106 of the L-shaped rear rigid axle steer lever 106 and one 108 of a plurality of driven levers 108, 109 of the T-shaped rear rigid axle lever 67, and an anti-roll anchor 69 rotatably connected to between left of the frame 41 and the other 109 of the plurality of driven arms 108, 109 of the T-shaped rear rigid axle steer lever 67.

In the front and rear wheel steering system 60, left and right rear links 70, 71 are arranged narrower backwardly at an appropriate space laterally of the frame 41, offset vertically forwardly of the frame 41, and connected to between the frame 41 and the rear rigid axle housing 43 to set a roll center O and an instantaneous center C of the rear rigid axle suspension 45 at a location behind of and above a center AO of the rear rigid axle 42, and to enhance a smooth anti-roll of the rear rigid axle suspension 45 and a smooth steering of the rear rigid axle 42.

The front power steering unit corresponds to the previously described front and rear wheel steering system 10.

The left and right vertical rear boosters 61, 62 are designed to generate an output power so that the rear rigid axle suspension 45 is made anti-roll by a double-acting piston type reciprocal cylinder and at the same time, the rear rigid axle 42 is compliance steered. Head covers of cylinder housings 72, 73 are pivotally connected to left and right brackets 103, 104 of the frame 41 and distal ends of piston rods 76, 77 are pivotally connected to the L-shaped and T-shaped rear rigid axle steer levers. The vertical rear boosters 61, 62 are constituted as a hydraulic circuit in which cylinder chambers 78, 79 and 80, 81 of the vertical rear boosters 61, 62 are defined within the cylinder housings 72, 73 by pistons 74, 75, connected to a hydraulic pump 64 and an oil reservoir 65 through hydraulic pipings 94, 95 and selectively connected to the hydraulic pump 64 and the oil reservoir 65 by the rear control valves 63 which are located on intermediate parts of the hydraulic pipings 94, 95. The hydraulic pipings 94, 95 used herein may include a feed piping 96, return pipings 97, 98 and branched communication pipings 99, 100.

The rear control valves 63 are switched by a pressurized fluid produced in a spool valve and introduced from the front booster to opposite ends of the spool 84, caused to selectively supply the pressurized fluid from the hydraulic pump 64 to the cylinder chambers 78, 79 and 80, 81 of the vertical rear boosters 61, 62 and at the same time, caused to selectively return the pressurized fluid from the cylinder chambers 78, 79 and 80, 81 of the left and right vertical rear boosters 61, 62 to the oil reservoir 65 to generate an output power at the left and right vertical rear boosters 61, 62.

Specifically, the rear control valves 63 each include a valve body 82, and a spool 84 reciprocally movably fitted into a spool bore 83 of the valve body 82 and for mutually dividedly defining at opposite end portions of the spool bore 83 control pressure chambers 85, 86 by opposite ends thereof. And in the rear control valve 63, the spool 84 is slid into the spool bore 83 to make a switching operation by a front left turn pressurized fluid and a front right turn pressurized fluid which are introduced into the control pressure chambers 85, 86 from the front power steering unit, so that the direction of the flow of the pressurized fluid supplied from the hydraulic pump 64 into the cylinder chambers 78, 79 and 80, 81 of the left and right vertical rear boosters 61, 62 and at the same time, the direction of the flow of the pressurized fluid returned from the cylinder chambers 78, 79 and 80, 81 of the left and right vertical rear boosters 61, 62 into the oil reservoir 65 is controlled.

The valve body 82 is formed on one side thereof with a pump port 87 and tank ports 88, 89 at predetermined spaces and on the other side thereof with pressure ports 90, 91 likewise at predetermined spaces. The valve body 82 is connected to intermediate parts of the hydraulic pipings 94, 95 through the pump port 87, the tank ports 88, 89 and the pressure ports 90, 91. Furthermore, the valve body 82 is formed on opposite ends thereof with control pressure ports 92, 93 and connected at the control pressure ports 92, 93 to the corresponding left turn cylinder chamber and the right turn cylinder chamber of the front booster through the control pressure pipings 101, 102.

In this way, the rear control valve 63 is connected at the control pressure chambers 85, 86 to the left turn and right turn cylinder chambers of the front booster through the control pressure pipings 101, 102, and switched by the front left turn pressurized fluid and the front right turn pressurized fluid which are introduced from the left turn and right turn cylinders into the control pressure chambers 85, 86. Of course, the switching operation of the rear control valve 63 is operatively connected to the front power steering unit.

Specifically, the switching operation of the rear control valve 63 is made such that the front left turn pressurized fluid is introduced from the left turn cylinder chamber of the front booster into the control pressure chamber 85 through the control hydraulic pipings 101 and the front right turn pressurized fluid is introduced from the right turn cylinder chamber of the front booster into the control pressure chamber 86 through the control hydraulic piping 102, and the spool 84 is slid into the spool bore 83 by the front left turn pressurized fluid and the front right turn pressurized fluid. Also, the rear control valve 63 makes a switching operation in operative connection to the front power steering unit by the front left turn pressurized fluid and the front right turn pressurized fluid introduced from the front control valve of the front power steering unit.

Operation of the front and rear wheel steering system 60 will be described next. When the steering wheel is turned left during the travelling operation of the middle-sized truck 40, the front control valve supplies a pressurized fluid from the hydraulic pump into the left turn cylinder chamber of the front booster and at the same time, the pressurized fluid is returned from the right turn cylinder chamber of the front booster into the oil reservoir and therefore, the front power steering unit steers the front wheels leftwardly by the output power generated at the front booster. On the other hand, the rear control valve 63 supplies the pressurized fluid from the hydraulic pump 64 into the cylinder chambers 79, 80 of the left and right vertical rear boosters 61, 62 and at the same time, returns the pressurized fluid from the cylinder chamber 78, 79 of the left and right vertical rear boosters 61, 62 into the oil reservoir 65 because the spool 84 is slid within the spool bore 83 by the front left turn pressurized fluid introduced from the left turn cylinder chamber of the front booster into the control pressure chamber 85 through the control pressure piping 101.

Since the direction of the flow of the pressurized fluid is controlled towards the left and right vertical rear boosters 61, 62 by the rear control valve 63 as mentioned above, the left vertical rear booster 61 generates an output power in the contracting direction and at the same time, the right vertical rear booster 62 generates an output power in the expanding direction. The output power thus generated at the left vertical rear booster 61 acts on the anti-roll anchor 69 via the L-shaped rear rigid axle steer lever 66, the link rod 68, and the T-shaped rear rigid axle steer lever 67. At the same time, the output power generated at the right vertical rear booster 62 acts on the anti-roll anchor 69 via the T-shaped rear rigid axle steer lever 67. As a consequence, the anti-roll anchor 69 is retained by left of the frame 41 and stretched. Due to the stretching of the anti-roll anchor 69, the above-mentioned output power causes the rear rigid axle suspension 45 to make an anti-roll and also causes, at the same time, a rear rigid axle 42 to steer at a small steering angle in the same phase as the front wheels. As a result, the middle-sized truck 40 is remarkably increased in turning stability and enhanced in easy steering. When the steering wheel is turned rightwardly, the front and rear wheel steering system 60 is operated in the reverse way with respect to the above-mentioned motion.

As discussed above, in a front and rear wheel steering system for use in motor vehicles according to the present invention, a front power steering unit is caused to steer front wheels by an output power generated at a front booster, and a horizontal rear booster is operatively connected to the front power steering unit to generate an output power and causes, when turning, a rear rigid axle suspension to make an anti-roll by such generated output power and also causes, at the same time, a rear rigid axle to steer at a small steering angle in the same phase as the front wheels. Accordingly, in the front and rear wheel steering system for use in motor vehicles according to the present invention, turning stability is remarkably increased and easy steering is enhanced to thereby improve the steering stability.

Also, in a front and rear wheel steering system for use in motor vehicles according to the present invention, a front power steering unit is caused to steer front wheels by an output power generated at a front booster, and left and right vertical rear boosters are operatively connected to the front power steering unit to generate an output power and causes, when turning, a rear rigid axle suspension to make an anti-roll by such generated output power and also causes, at the same time, a rear rigid axle to steer at a small steering angle in the same phase as the front wheels. Accordingly, in the front and rear wheel steering system for use in motor vehicles according to the present invention, turning stability is remarkably increased and easy steering is enhanced to thereby improve the steering stability.

As apparent from the specific embodiments of the present invention which have been described with reference to the drawings, it will be easy for a person having ordinary skill in the art to which the subject matter of the present invention pertains to modify the contents of the present invention into other forms which can be objectively determined to be originated from the nature and the substance of the invention and to contain therein the nature and the substance of the invention. Of course, the contents of the present invention are commensurate with the problems to be solved by the present invention and essential in accomplishment of the invention.

### Industrial Applicability

As understood from the description made hereinbefore, a front and rear wheel steering system for use in motor vehicles according to the present invention is very useful and practical for motor vehicles, among all, middle-sized commercial vehicles which are equipped with a rigid axle.

## Claims

1. A front and rear wheel steering system (10) for use in motor vehicles in which a front power steering unit is caused to steer front wheels by an output power generated at a front booster, and a horizontal rear booster (15) is operatively connected to the front power steering unit to generate an output power and causes, when turning, a rear rigid axle suspension (45) to make an anti-roll by such generated output power and also causes, at the same time, a rear rigid axle (42) to steer at a small steering angle in the same phase as the front wheels.

2. A front and rear wheel steering system (10) for use in motor vehicles in which a front power steering unit is caused to steer front wheels by an output power generated at a front booster, left and right rear links (11, 12) are arranged narrower backwardly at an appropriate space laterally of a frame (41), raised vertically forwardly of the frame and connected to between the frame and the rear rigid axle to set a roll center (O) and an instantaneous center (C) of a rear rigid axle suspension (45) at a location behind of and above a center (AO) of the rear rigid axle, and a horizontal rear booster (15) is operatively connected to the front power steering unit to generate an output power and causes, when turning, such generated output power to act on the rear rigid axle with an acting position of such generated output power properly offset either leftwardly or rightwardly from the roll center and the instantaneous center at a location below and ahead of the centers, so that the rear rigid axle suspension makes an anti-roll and, at the same time, the rear rigid axle steers at a small steering angle in the same phase as the front wheels.

3. A front and rear wheel steering system (50) for use in motor vehicles in which a front power steering unit is caused to steer front wheels by an output power generated at a front booster, left and right rear links (11, 12) are arranged narrower backwardly at an appropriate space laterally of a frame (41), raised vertically forwardly of the frame and connected to between the frame and the rear rigid axle to set a roll center (O) and an instantaneous center (C) of a rear rigid axle suspension (45) at a location ahead of and below a center (AO) of the rear rigid axle, and a horizontal rear booster (15) is operatively connected to the front power steering unit to generate an output power and causes, when turning, such generated output power to act on the rear rigid axle with an acting position of such generated output power properly offset either leftwardly or rightwardly from the roll center and the instantaneous center at a location above and behind of the centers, so that the rear rigid axle suspension makes an anti-roll and, at the same time, the rear rigid axle steers at a small steering angle in the same phase as the front wheels.

4. A front and rear wheel steering system (10) for use in motor vehicles in which a front power steering unit is caused to steer front wheels by an output power generated at a front booster, left and right rear links (11, 12) are arranged narrower backwardly at an appropriate space laterally of a frame (41), raised vertically forwardly of the frame, and connected to between the frame and a rear rigid axle (42) to set a roll center (O) and an instantaneous center (C) of a rear rigid axle suspension (45) at a location behind of and above a center of the rear rigid axle, a vertical turnable lever (13) is located ahead of the roll center and the instantaneous center of the rear rigid axle suspension with an upper end thereof leftwardly and rightwardly turnably supported on one side of the frame and with a lower end thereof extending downwardly exceeding the roll center and the instantaneous center, a horizontal push pull rod (14) is located ahead of and below the roll center and the instantaneous center and extending sidewardly of the roll center and the instantaneous center with one end thereof rotatably connected to a lower end of the turnable lever and with the other end thereof rotatably connected to a rear axle side, and a horizontal rear booster (15) is located above the push pull rod with one end thereof rotatably connected to the turnable lever and with the other end thereof rotatably connected to the other side of the frame, operatively connected to the front power steering unit to generate an output power and to cause, when turning, such generated output power to act on the rear rigid axle through the turnable lever and the push pull rod so that the rear rigid axle suspension makes an anti-roll and, at the same time, the rear rigid axle steers at a small steering angle in the same phase as the front wheels.

5. A front and rear wheel steering system (10) for use in motor vehicles comprising a front power steering unit caused to steer front wheels by an output power generated at a front booster, left and right rear links (11, 12) arranged narrower backwardly at an appropriate space laterally of a frame (41), raised vertically forwardly of the frame, and connected to between the frame and a rear rigid axle (42) to set a roll center (O) and an instantaneous center (C) of a rear rigid axle suspension (45) at a location behind of and above a center (AO) of the rear rigid axle, a vertical turnable lever (13) located ahead of the roll center and the instantaneous center of the rear rigid axle suspension with an upper end thereof leftwardly and rightwardly turnably supported on one side of the frame and with a lower end thereof extending downwardly exceeding the roll center and the instantaneous center, a horizontal push pull rod (14) located ahead of and below the roll center and the instantaneous center and extending sidewardly of the roll center and the instantaneous center with one end thereof rotatably connected to a lower end of the turnable lever and with the other end thereof rotatably connected to a rear axle side, a horizontal rear booster (15) located above the push pull rod with one end thereof rotatably connected to the turnable lever and with the other end thereof rotatably connected to the other side of the frame, and a rear control valve (16) located at intermediate part of a hydraulic piping (19, 20) for connecting the horizontal rear booster to a hydraulic pump (17) and an oil reservoir (18), operatively connected to the front power steering unit to supply and discharge a pressurized fluid to and from the horizontal rear booster, and to generate an output power at the horizontal rear booster.

6. A front and rear wheel steering system (10) for use in motor vehicles according to claim 5, wherein the rear control valve is switched by a pressurized fluid produced in a spool valve and introduced from the front booster to opposite ends of the spool (28).

7. A front and rear wheel steering system (10) for use in motor vehicles according to claim 5, wherein the rear control valve is switched by a pressurized fluid produced in the spool valve and introduced from a front control valve of the front power steering unit to opposite ends of the spool.

8. A front and rear wheel steering system (50) for use in motor vehicles in which a front power steering unit is caused to steer front wheels by an output power generated at a front booster, left and right rear links (11, 12) are arranged narrower backwardly at an appropriate space laterally of a frame (41), raised vertically forwardly of the frame, and connected to between the frame and a rear rigid axle (42) to set a roll center (O) and an instantaneous center (C) of a rear rigid axle suspension (45) at a location behind of and above a center (AO) of the rear rigid axle, a vertical turnable lever (51) is located behind of the roll center and the instantaneous center of the rear rigid axle suspension with an upper end thereof leftwardly and rightwardly turnably supported on one side of the frame and with a lower end thereof extended downwardly to a location above the roll center and the instantaneous center, a horizontal push pull rod (14) is located behind of and above the roll center and the instantaneous center and extending sidewardly of the roll center and the instantaneous center with one end thereof rotatably connected to a lower end of the turnable lever and with the other end thereof rotatably connected to a rear axle side, and a horizontal rear booster (15) is located above the push pull rod with one end thereof rotatably connected to the turnable lever and with the other end thereof rotatably connected to the other side of the frame, operatively connected to the front power steering unit to generate an output power and to cause, when turning, such generated output power to act on the rear rigid axle through the turnable lever and the push pull rod so that the rear rigid axle suspension makes an anti-roll and, at the same time, the rear rigid axle steers at a small steering angle in the same phase as the front wheels.

9. A front and rear wheel steering system (50) for use in motor vehicles comprising a front power steering unit caused to steer front wheels by an output power generated at a front booster, left and right rear links (11, 12) arranged narrower backwardly at an appropriate space laterally of a frame (41), raised vertically forwardly of the frame, and connected to between the frame and a rear rigid axle (42) to set a roll center (O) and an instantaneous center (C) of a rear rigid axle suspension (45) at a location behind of and above a center (AO) of the rear rigid axle, a vertical turnable lever (51) located behind of the roll center and the instantaneous center of the rear rigid axle suspension with an upper end thereof leftwardly and rightwardly turnably supported on one side of the frame and with a lower end thereof extended downwardly to a location above the roll center and the instantaneous center, a horizontal push pull rod (14) located behind of and above the roll center and the instantaneous center and extending sidewardly of the roll center and the instantaneous center with one end thereof rotatably connected to a lower end of the turnable lever and with the other end thereof rotatably connected to a rear axle side, a horizontal rear booster (15) located above the push pull rod with one end thereof rotatably connected to the turnable lever and with the other end thereof rotatably connected to the other side of the frame, and a rear control valve (16) located at intermediate part of a hydraulic piping (19, 20) for connecting the horizontal rear booster to a hydraulic pump (17) and an oil reservoir (18), operatively connected to the front power steering unit to supply and discharge a pressurized fluid to and from the horizontal rear booster, and to generate an output power at the horizontal rear booster.

10. A front and rear wheel steering system (50) for use in motor vehicles according to claim 9, wherein the rear control valve is switched by a pressurized fluid produced in a spool valve and introduced from the front booster to opposite ends of the spool.

11. A front and rear wheel steering system (50) for use in motor vehicles according to claim 9, wherein the rear control valve is switched by a pressurized fluid produced in a spool valve and introduced from a front control valve of the front power steering unit to opposite ends of the spool.

12. A front and rear wheel steering system (60) for use in motor vehicles in which a front power steering unit is caused to steer front wheels by an output power generated at a front booster, and left and right vertical rear boosters (61, 62) are operatively connected to the front power steering unit to generate an output power and cause, when turning, a rear rigid axle suspension (45) to make an anti-roll by such generated output power and also causes, at the same time, a rear rigid axle (42) to steer at a small steering angle in the same phase as the front wheels.

13. A front and rear wheel steering system (60) for use in motor vehicles comprising a front power steering unit caused to steer front wheels by an output power generated at a front booster, and left and right vertical rear boosters (61, 62) rotatably supported on left and right of a frame (41) in a corresponding manner, a rear control valve (63) located at an intermediate part of a hydraulic piping (94, 95) for connecting the left and right vertical rear boosters to a hydraulic pump (64) and an oil reservoir (65), operatively connected to the front power steering unit to supply and discharge a pressurized fluid to and from the left and right vertical rear boosters, and to generate an output power at the left and right vertical rear boosters, an L-shaped rear rigid axle steer lever (66) turnably supported on a rear rigid axle housing (43) in such a manner as to correspond to the left vertical rear booster and rotatably connecting a driving arm (105) to the left vertical rear booster, a T-shaped rear rigid axle steer lever (67) turnably supported on the rear rigid axle housing (43) in such a manner as to correspond to the right vertical rear booster and rotatably connecting a driving arm (107) to the right vertical rear booster, a link rod (68) rotatably connected to between a driven arm (106) of the L-shaped rear rigid axle steer lever and one of a plurality of driven levers (108, 109) of the T-shaped rear rigid axle lever, and an anti-roll anchor (69) rotatably connected to between left of the frame and the other of the plurality of driven arms of the T-shaped rear rigid axle steer lever.

14. A front and rear wheel steering system (60) for use in motor vehicles according to claim 13, wherein the rear control valve is switched by a pressurized fluid produced in a spool valve and introduced from the front booster to opposite ends of the spool.

15. A front and rear wheel steering system (60) for use in motor vehicles according to claim 13, wherein the rear control valve is switched by a pressurized fluid produced in a spool valve and introduced from a front control valve of the front power steering unit to opposite ends of the spool.
